# EUROPÄISCHE PATENTSCHRIFT

(11) **EP 3 356 130 B1**
(45) Veröffentlichungstag und Bekanntmachung des Hinweises auf die Patenterteilung: **20.02.2019**
(21) Anmeldenummer: 16778723.3
(22) Anmeldetag: 28.09.2016
(51) Int. Cl.: B32B 5/02, B32B 7/12, B32B 23/00, B32B 27/28, B32B 27/30, B32B 27/32, B32B 27/34, B32B 27/36, B29C 49/00, B32B 37/00, B32B 38/00, B60C 15/00, B32B 1/02

(54) **MEHRLAGIGES VERBUNDMATERIAL FÜR DIE HERSTELLUNG VON KUNSTSTOFFFORMTEILEN, BEHÄLTER AUS EINEM SOLCHEN VERBUNDMATERIAL SOWIE VERFAHREN ZUR HERSTELLUNG DES BEHÄLTERS**
MULTI-LAYER COMPOSITE MATERIAL FOR PRODUCING PLASTIC MOLDED PARTS, CONTAINER COMPOSED OF SUCH A COMPOSITE MATERIAL, AND METHOD FOR PRODUCING THE CONTAINER
MATÉRIAU COMPOSITE MULTICOUCHES POUR LA FABRICATION DE PIÈCES MOULÉES EN MATIÈRE PLASTIQUE, RÉCIPIENT FAIT D'UN MATÉRIAU COMPOSITE DE CE TYPE ET PROCÉDÉ DE FABRICATION DU RÉCIPIENT

(30) Priorität: 28.09.2015 DE 102015218584; 17.11.2015 DE 102015222668
(43) Veröffentlichungstag der Anmeldung: 08.08.2018
(73) Patentinhaber: Kautex Textron GmbH & Co. KG, 53229 Bonn (DE)
(72) Erfinder: KARSCH, Ulrich, 53859 Niederkassel (DE)
(74) Vertreter: Richly & Ritschel Patentanwälte PartG mbB
(86) Internationale Anmeldenummer: PCT/EP2016/073105
(87) Internationale Veröffentlichungsnummer: WO 2017/055347

(56) Entgegenhaltungen:
- DE-A1-102010 027 096
- DE-A1-102013 004 929
- DE-A1-102013 004 931

## Beschreibung

Die Erfindung betrifft ein mehrlagiges Verbundmaterial für die Herstellung von Kunststoffformteilen. Die Erfindung betrifft insbesondere ein mehrlagiges Verbundmaterial für die Herstellung von druckfesten, dünnwandigen Behältern wie beispielsweise Kraftstoffbehältern für Kfz.

Die Erfindung betrifft weiterhin ein Verfahren zur Herstellung eines Behälters aus einem mehrlagigen Verbundmaterial.

Insbesondere bei der Entwicklung von Kunststoffformteilen für automobile Zwecke spielen Gewichtseinsparungen eine bedeutende Rolle. Darüber hinaus ist allerdings auch die Formstabilität von Kunststoffformteilen im Automobilbau kritisch, insbesondere bei der Herstellung von in Kraftfahrzeugen eingebauten Behältern wie beispielsweise Kraftstoffbehältern, Harnstoffbehältern oder anderen Nebenflüssigkeitsbehältern.

Solche Behälter, insbesondere Kunststoffkraftstoffbehälter, sind häufig als ein- oder mehrteilige Behälter auf der Basis von Polyethlyen (HDPE) ausgebildet. Insbesondere Kraftstoffbehälter für Ottokraftstoff besitzen einen mehrschichtigen Wandaufbau mit Barriereschichten für Kohlenwasserstoffe oder sind durch chemische Behandlung gegen Kohlenwasserstoffe beständig gemacht worden.

Kunststoff-Kraftstoffbehälter auf der Basis von HDPE besitzen den Vorzug, dass sie mit einer räumlich verhältnismäßig komplexen Gestalt herstellbar sind und hinreichend formbeständig und stabil sind. Auch sind solche Kraftstoffbehälter hinreichend stoßfest, sodass diese entsprechenden Aufprallkräften im Crashfall widerstehen können. Kurzfristige Deformationen eines Kraftstoffbehälters im Crashfall führen in der Regel nicht zu dauerhaften Konturänderungen. Die bekannten Kraftstoffbehälter aus Kunststoff sind auch bei kurzfristig erhöhtem Innendruck weitestgehend formstabil, zumindest derart, dass diese bei nachlassendem Druck wieder ihre Ausgangsgestalt annehmen.

Thermoplastische Kunststoffe sind allerdings mit dem Nachteil behaftet, dass der thermoplastische Kunststoff bei länger einwirkenden Verformungskräften zum Kriechen neigt.

Werkstoffe auf der Basis von HDPE, seien sie einlagig oder mehrlagig, sind daher in der Regel nicht ohne Weiteres für die Herstellung von Behältern geeignet, die über längere Zeit einem erhöhten Innendruck standhalten müssen. Bereits ein Überdruck in der Größenordnung von etwa 400 mbar führt bei einem Behälter auf der Basis von HDPE über längere Zeit zu bleibenden Verformungen des Materials.

Behälter und Formteile aus Polyethylen oder aus Polyamid oder auf der Basis von Polyethylen haben zudem den Nachteil, dass eine hinreichende Stabilität nur über entsprechend große Wandstärken der Bauteile erreicht werden kann. Gewichtseinsparungen an solchen Kunststoffformteilen nur durch Designmaßnahmen sind nur begrenzt möglich, weswegen auch im Automobilbau Kunststoffformteile aus Faserverbundwerkstoffen zunehmend eine Rolle spielen.

Aus der DE 10 2010 027 096 A1 ist beispielsweise ein Kraftstoffbehälter aus Kunststoff mit einer mehrlagigen Behälterwandung bekannt, die eine innere Lage aus thermoplastischem Kunststoff sowie eine äußere Lage aus einem Faserverbundwerkstoff umfasst. Diese Lagen sind stoffschlüssig miteinander verbunden, wobei als innere Lage ein mehrschichtiges Extrudat auf der Basis von Polyethlyen mit einer Barriereschicht für Kohlenwasserstoffe vorgesehen ist.

Ein solches Verbundmaterial hat den Vorzug, dass der hieraus hergestellte Behälter eine außenliegende verhältnismäßig steife und leichte Lage aufweist, wohingegen die innere Lage eine gewisse Nachgiebigkeit aufweist und insbesondere die Dichtigkeit des Behälters sicherstellt.

Faserverbundwerkstoffe wie beispielsweise hochfeste Organobleche neigen allerdings bei tiefen Temperaturen bei Einwirkung aufprallbedingter Verformungskräfte zu Sprödbrüchen.

Erfahrungen haben gezeigt, dass bei der Kombination von sprödharten und duktilen Kunststoffschichten, die stoffschlüssig miteinander verbunden sind und damit einen Schichtverbund bilden, Rissbildungen in der harten und spröden Schicht dazu neigen, sich in der duktilen Schicht fortzusetzen, wenn die duktile Schicht nicht eine gewisse Wandstärke aufweist. Daraus resultiert, dass signifikante Gewichtseinsparungen von Kunststoffformteilen aus einem Verbundmaterial, wie es beispielsweise in der
DE 10 2010 027 096 A1 beschrieben ist, durch Reduktion von Schichtdicken der den Verbund bildenden Materialien nicht möglich sind.

Aus der DE 10 2013 004 931 A1 ist ein Verfahren zur Herstellung eines Kraftstoffbehälters auf der Basis von thermoplastischem Kunststoff bekannt, wobei das Verfahren das Herstellen von plattenförmigen Halbzeugen aus einem Faserverbundwerkstoff mit einer Matrix aus thermoplastischem Kunststoff, das Kaschieren der Halbzeuge mit einem Laminat, welches wenigstens eine Barriereschicht für Kohlenwasserstoffe umfasst, die Wärmebehandlung der kaschierten Halbzeuge bis zur Plastifizierung des thermoplastischen Kunststoffs, das Tiefziehen der Halbzeuge in einem Tiefziehwerkzeug zu Schalen und das Fügen der Schalen zu einem geschlossenen Behälter umfasst.

Weiterer Stand der Technik ist aus den Dokumenten DE 10 2010 027 096 A1 und DE 10 2013 004 929 A1 bekannt.

Der Erfindung liegt daher die Aufgabe zugrunde, ein mehrlagiges Verbundmaterial für die Herstellung von Kunststoffteilen, insbesondere für die Herstellung von Behältern, beispielsweise von Kraftstoffbehältern oder sonstigen Betriebsflüssigkeitsbehältern für Kfz bereitzustellen, welches besonders leicht und bruchsicher ist. Darüber hinaus soll das Verbundmaterial auch Barriereeigenschaften aufweisen, d. h. im Wesentlichen einen molekularen Stofftransport von flüssigen und gasförmigen Substanzen durch das Material verhindern.

Die Aufgabe wird gelöst durch ein mehrlagiges Verbundmaterial für die Herstellung von Kunststoffformteilen gemäß dem Anspruch 1.

Erfindungsgemäß wird weiterhin ein Behälter aus einem solchen mehrlagigen Verbundmaterial bereitgestellt. Schließlich umfasst die Erfindung auch ein Verfahren zur Herstellung eines solchen Behälters aus einem erfindungsgemäßen mehrlagigen Verbundmaterial.

Vorteilhafte Ausgestaltungen der Erfindung sind jeweils durch die Unteransprüche erfasst.

Ein Gesichtspunkt der Erfindung betrifft ein mehrlagiges Verbundmaterial für die Herstellung von Kunststoffformteilen umfassend:
- eine erste strukturgebende, selbsttragend steife Außenschicht aus einem Faserverbundwerkstoff,
- eine zweite strukturgebende Außenschicht
- eine reißfeste Zwischenschicht aus einem Kunststoff ausgewählt aus einer Gruppe umfassend reißfest modifiziertes Polyethylen, Polyisobutylen, Polyvinylbutyral, Ethylenvinylacetat, Polyacrylat, Polymethylenacrylat, Polyurethan, vorgerecktes Polypropylen, Polyvinylacetat und Ethylenvinylacetat und
- wenigstens eine Haftvermittlerschicht,
wobei die Zwischenschicht und die Haftvermittlerschichten zwischen den strukturgebenden Außenschichten eingebettet sind und mit den strukturgebenden Außenschichten einen Haftverbund bilden und wobei die strukturgebenden Außenschichten jeweils eine Dicke aufweisen, die ein Vielfaches der Dicke der Zwischenschicht oder der Haftvermittlerschicht beträgt.

Insbesondere die reißfeste Zwischenschicht kann in das Verbundmaterial eingeleitete Bruchenergie so aufnehmen, dass beispielsweise wenn die erste strukturgebende selbsttragend steife Außenschicht reißt, sich eine solche Rissbildung nicht in den übrigen Schichten des Verbundmaterials fortsetzt. Eine reißfeste Zwischenschicht im Sinne der Erfindung ist eine dünne reißfeste Folie mit einer Bruchdehnung von ≥ 300 %.

Als reißfeste Zwischenschicht kommen dünne, reißfeste Folien in Betracht, die mit den diese umgebenden Schichten einen stoffschlüssigen Verbund im Sinne einer Verklebung bilden. Die reißfeste Zwischenschicht hält somit den Schichtenverbund jedenfalls zusammen, sodass insgesamt das mehrlagige Verbundmaterial bei geringer Materialstärke eine hohe Bruchsicherheit aufweist. Die reißfeste Zwischenschicht hat eine Dicke zwischen etwa 50 µm und 1520 µm, besonders bevorzugt zwischen 50 µm und 300 µm, aufweisen.

Grundsätzlich kann die zweite strukturgebende Außenschicht ebenfalls aus einem Faserverbundwerkstoff bestehen.

Grundsätzlich kann das mehrlagige Verbundmaterial im Sinne der vorliegenden Erfindung eine Vielzahl von strukturgebenden und selbsttragend steifen Schichten umfassen, zwischen denen jeweils reißfeste Zwischenschichten angeordnet sind.

Obwohl die strukturgebenden Außenschichten im Sinne der vorliegenden Erfindung auch äußerste Schichten bilden können und dies bevorzugt auch tun, ist im Rahmen der Erfindung auch vorgesehen, dass auf den strukturgebenden Außenschichten auch weitere Schichten angeordnet sein können, sodass die strukturgebenden Außenschichten nicht die äußersten Schichten bilden müssen.

Die zweite strukturgebende Außenschicht kann aus einem Polyolefin oder einem Polyamid bestehen und beispielsweise eine Dicke von zwischen 0,5 und 1,5 mm aufweisen.

Bei einer bevorzugten Variante des zuvor beschriebenen mehrlagigen Verbundmaterials ist vorgesehen, dass die zweite strukturgebende Außenschicht eine HDPE-Schicht (High Density Polyethylene) oder eine PA Schicht ist. Diese Schicht aus HDPE oder PA (Polyamid) kann beispielsweise als Schutzschicht für eine Zwischenschicht aus einem Barrierekunststoff oder als sogenannte Schweißreserve dienen. Als Schweißreserve werden im Allgemeinen Schichten eines Kunststoffformteils bezeichnet, die eine Verschweißung mit anderen Kunststoffformteilen ohne die Bereitstellung zusätzlicher Schweißstoffe oder Klebstoffe gewährleisten.

Als Faserverbundwerkstoff im Sinne der vorliegenden Erfindung ist ein Werkstoff mit einer thermoplastischen oder einer duoplastischen Matrix mit in dieser eingebetteten Langfasern oder sogenannten "Endlosfasern" vorgesehen, wobei die Langfasern oder Endlosfasern ausgewählt sind aus einer Gruppe umfassend Glasfasern, Kohlenstofffasern und Aramidfasern und die Langfasern oder Endlosfasern gewebt oder gelegt sind.

Unter einer Langfaser im Sinne der vorliegenden Erfindung ist eine Faser mit einer Länge zwischen 1 mm und 50 mm zu verstehen. Unter einer Endlosfaser im Sinne der vorliegenden Erfindung ist eine Faser mit einer Länge von mehr als 50 mm zu verstehen.

Unter einer gelegten Langfaser oder gelegten Endlosfaser im Sinne der vorliegenden Erfindung ist eine Anordnung von Langfasern oder Endlosfasern zu verstehen, die nicht durch sogenannte Kett- und Schussfäden im Sinne eines Gewebes verbunden sind. Hierunter ist eine lose gerichtete und geschichtete Anordnung von Langfasern oder Endlosfasern in dem Matrixwerkstoff zu verstehen.

Als Faserverbundmaterial im Sinne der vorliegenden Erfindung kommen insbesondere sogenannte Organobleche in Betracht. Hierunter wird im Allgemeinen ein Faser-Matrix-Halbzeug verstanden, das ein Fasergewebe oder ein Fasergelege umfasst, welches in eine thermoplastische Kunststoffmatrix eingebettet ist. Ein Fasergelege ist eine Anordnung aus gelegten Langfasern oder Endlosfasern im Sinne der vorliegenden Definition.

Das mehrlagige Verbundmaterial gemäß der Erfindung umfasst vorzugsweise weiterhin eine weitere Zwischenschicht aus einem Barrierekunststoff.

Unter einem Barrierekunststoff im Sinne der vorliegenden Erfindung ist ein Kunststoff zu verstehen, der für flüssige und gasförmige Substanzen nicht oder im Wesentlichen nicht porös ist, d. h. dass durch diesen kein nennenswerter molekularer Stofftransport von flüssigen und gasförmigen Substanzen im Sinne einer Permeation stattfindet.

Der Barrierekunststoff kann beispielsweise ausgewählt sein, aus einer Gruppe umfassend Polyvinyllidenchlorid (PVDC), Ethylen-Vinyl-Alkohol-Copolymer (EVOH), flüssigkristallines Polymer (LCP), Polyamid 6 (PA 6), Zellulose und biaxial verstrecktes Polypropylen (BOPP).

Besonders geeignet als Barrierekunststoff ist EVOH.

Als Haftvermittler ist beispielsweise ein maleinsäureanhydrid modifiziertes LDPE (Low Density Polyethylene) oder ein LLDPE vorgesehen.

Das mehrlagige Verbundmaterial gemäß einer Variante der Erfindung zeichnet sich durch einen Schichtenaufbau umfassend der Reihe nach eine äußere HDPE-Schicht oder eine äußere PA-Schicht, eine reißfeste Zwischenschicht und eine Schicht aus einem Faserverbundmaterial aus.

Das Faserverbundmaterial selbst kann mehrlagig ausgebildet sein, wobei zwischen einzelnen Faserlagen, die jeweils in einen Matrixwerkstoff in Form eines thermoplastischen oder duroplastischen Kunststoffs eingebettet sind, jeweils eine reißfeste Zwischenschicht angeordnet sein kann.

Das mehrlagige Verbundmaterial gemäß einer anderen Variante der Erfindung kann einen Schichtenaufbau umfassend der Reihe nach eine äußere HDPE-Schicht oder eine äußere PA-Schicht, eine angrenzende erste Haftvermittlerschicht, eine Zwischenschicht aus einem Barrierekunststoff, eine zweite Haftvermittlerschicht, eine reißfeste Zwischenschicht und gegebenenfalls eine dritte Haftvermittlerschicht sowie eine strukturgebende Außenschicht aus einem Faserverbundmaterial umfassen.

Grundsätzlich kann die Dicke der strukturgebenden Schichten zwischen 0,5 mm und 2 mm, vorzugsweise zwischen 1 und 1,5 mm betragen, wohingegen die Dicke der Zwischenschichten, d.h. sowohl der Zwischenschicht aus Barrierekunststoff als auch der reißfesten Zwischenschicht, sowie der Haftvermittlerschicht jeweils zwischen 50 µm und 1520 µm betragen kann.

Ein weiterer Gesichtspunkt der vorliegenden Erfindung betrifft einen Behälter aus einem mehrlagigen Verbundmaterial der vorstehend beschriebenen Art, wobei die erste strukturgebende Außenschicht eine Außenschicht des Behälters ist und wobei die zweite strukturgebende Außenschicht eine Innenschicht des Behälters ist. Insbesondere wenn die zweite strukturgebende Außenschicht aus HDPE oder PA besteht, ist es einfach möglich, den Behälter gemäß der Erfindung aus mehreren Schalen herzustellen, die mit aufeinander liegenden Innenschichten miteinander verschweißt werden.

Eine bevorzugte Ausgestaltung des Behälters gemäß der Erfindung ist als Kraftstoffbehälter für ein Kraftfahrzeug ausgebildet.

Wie vorstehend bereits erwähnt, kann der Behälter aus zwei schalenförmigen Formteilen umfassend eine Oberschale und eine Unterschale zusammengesetzt sein, wobei die Oberschale und die Unterschale beispielsweise an flanschartig ausgebildeten Rändern miteinander verschweißt sein können. Die Begriffe "Oberschale" und "Unterschale" beziehen sich jeweils auf die Einbaulage des Behälters.

Erfindungsgemäß ist weiterhin ein Verfahren zur Herstellung eines Behälters aus einem mehrlagigen Verbundmaterial mit den vorstehend beschriebenen Merkmalen vorgesehen, wobei das Verfahren folgende Verfahrensschritte umfasst:
- Bereitstellen von Faser-Matrix-Halbzeugen als Faser-Verbundwerkstoff,
- Erhitzen und Plastifizieren der Faser-Matrix-Halbzeuge,
- Umformen der Faser-Matrix-Halbzeuge zu schalenförmigen Zwischenerzeugnissen,
- Bereitstellen eines mehrschichtigen plastifizierten Extrudats umfassend eine strukturgebende HDPE-Schicht oder eine strukturgebende PA Schicht und wenigstens eine Zwischenschicht,
- Einbringen des plastischen Extrudats in das plastifizierte und umgeformte Faser-Matrix-Halbzeug und stoffschlüssiges Verbinden des Faser-Matrix-Halbzeugs und des Extrudats unter Ausnutzung der Plastifizierungswärme und/oder mittels eines Haftvermittlers.

Das mehrschichtige Extrudat kann mehrere Zwischenschichten umfassen, von denen wenigstens eine Zwischenschicht aus einem Barrierekunststoff bestehen kann.

Bei einer Verbindung des Faser-Matrix-Halbzeugs und des Extrudats unter Ausnutzung der Plastifizierungswärme erfolgt das Einbringen des plastischen Extrudats in das plastifizierte und umgeformte Faser-Matrix-Halbzeug sowie das stoffschlüssige Verbinden des Faser-Matrix-Halbzeuges und des Extrudats beinahe gleichzeitig.

Das Extrudat kann beispielsweise in bekannter Art und Weise als Co-Extrudat aus einem Extrusionskopf einer Extrusionsblasformmaschine bereitgestellt werden.

Das Verfahren kann grundsätzlich das Plastifizieren von Faser-Matrix-Halbzeugen mit einer thermoplastischen Matrix, das Einbringen dieser Faser-Matrix-Halbzeuge in ein Extrusionsblasformwerkzeug und das sogenannte Einblasen eines mehrschichtigen Extrudats in das Extrusionsblasformwerkzeug gegen das bereits in dem Werkzeug ausgeformte Faser-Matrix-Halbzeug umfassen.

Im Rahmen der Erfindung ist auch das Laminieren eines mehrlagigen Verbundmaterials gemäß der vorliegenden Erfindung zu plattenförmigen Halbzeugen, die dann in der zweiten Hitze, d. h. durch Wiederaufheizen zu schalenförmigen Zwischenerzeugnissen umgeformt werden. Das Herstellen der schalenförmigen Zwischenerzeugnisse kann in diesem Falle beispielsweise mittels herkömmlicher Tiefzieheinrichtungen erfolgen.

Die Erfindung wird nachstehend anhand eines in den Zeichnungen dargestellten Ausführungsbeispiels erläutert. Es zeigen die:
- Figur 1: einen Schichtenaufbau eines mehrlagigen Verbundmaterials nach einem ersten Ausführungsbeispiel der Erfindung und
- Figur 2: einen Schichtenaufbau eines mehrlagigen Verbundmaterials nach einem zweiten Ausführungsbeispiel Erfindung.

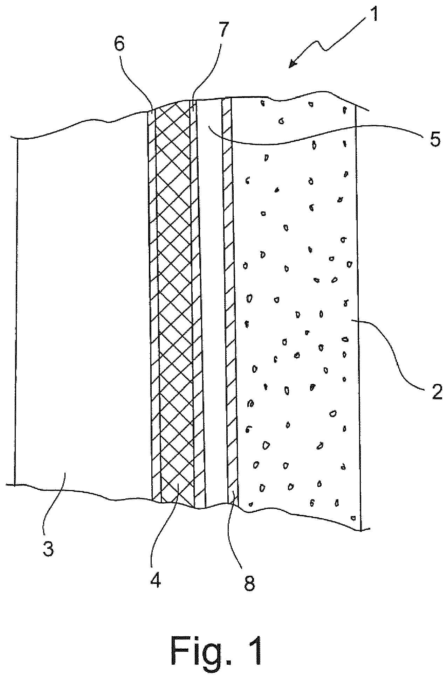

Ein Schichtenaufbau eines mehrlagigen Verbundmaterials gemäß der Erfindung ist beispielsweise in der beigefügten Figur 1 dargestellt.

Figur 1 zeigt einen schematischen Schichtenaufbau eines mehrlagigen Verbundmaterials 1 gemäß der Erfindung umfassend eine erste strukturgebende Außenschicht 2 aus einem Faserverbundwerkstoff und eine zweite strukturgebende Außenschicht 3 aus einem HDPE. Der in Figur 1 dargestellte Schichtenschnitt veranschaulicht auch den Wandaufbau eines Behälters gemäß der Erfindung. Die ersten und zweiten strukturgebenden Außenschichten 2 und 3 sind jeweils äußerste Schichten der Behälterwand, wobei die erste strukturgebende Außenschicht 2 eine Außenseite des Behälters bildet und die zweite strukturgebende Außenschicht 3 eine Innenseite des Behälters bildet.

Zwischen der ersten strukturgebenden Außenschicht 2 und der zweiten strukturgebenden Außenschicht 3 sind erste und zweite Zwischenschichten 4 und 5 angeordnet, die jeweils als dünne Folien mit einer Schichtdicke zwischen 50 und 300 µm ausgebildet sind. Diese Schichten sind entsprechend flexibel und keine strukturgebenden Schichten im Sinne der Erfindung. Die zweite Zwischenschicht 5 ist als reißfeste Zwischenschicht im Sinne der vorliegenden Erfindung ausgebildet, wohingegen die erste Zwischenschicht 4 aus einem Barrierekunststoff besteht.

Die erste strukturgebende Außenschicht 2 besteht aus einem Faserverbundwerkstoff mit in einer thermoplastischen Matrix eingebetteten Endlosfaser, die zweite strukturgebende Außenschicht 3, die die Innenschicht des Behälters bildet, besteht aus einem HDPE. Die erste strukturgebende Außenschicht 2 und die zweite strukturgebende Außenschicht 3 sind beide selbsttragend steif ausgebildet und weisen jeweils eine Schichtdicke von etwa 0,5 bis 2 mm auf.

Die erste strukturgebende Außenschicht 2 bildet zwar die Außenseite des Behälters, die Erfindung ist jedoch so zu verstehen, dass diese erste strukturgebende Außenschicht 2 außen mit einem Schutzlack versehen sein kann.

Die erste Zwischenschicht 4 ist bei dem beschriebenen Ausführungsbeispiel bevorzugt eine EVOH-Schicht (EthylenVinylalkohol-Copolymer), die in eine erste und zweite Haftvermittlerschicht 6, 7 eingebettet ist.

Die zweite Zwischenschicht 5 besteht beispielsweise aus einem Polyisobutylen und ist als reißfeste Zwischenschicht bzw. Folie im Sinne der Erfindung ausgebildet. Die zweite Zwischenschicht 5 ist zwischen die zweite Haftvermittlerschicht 7 und eine dritte Haftvermittlerschicht 8 eingebettet, sodass über die zweite Zwischenschicht 5 eine Verklebung des Schichtenverbundes bewirkt wird.

Die zweite Zwischenschicht 5 als reißfeste, dünne Folie nimmt beispielsweise bei einer Stoßbeanspruchung der ersten strukturgebenden Außenschicht 2 die Verformungsbruchenergie auf, sodass etwa sich bildende Risse sich nicht in die erste Zwischenschicht 4 und in die zweite strukturgebende Außenschicht 3 fortpflanzen können.

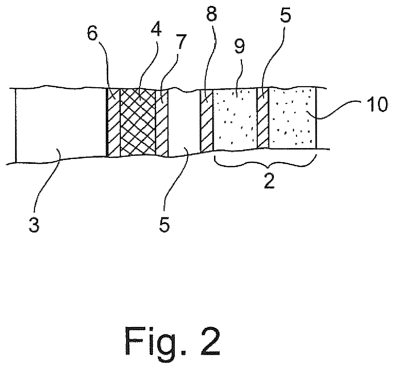

Ein zweites Ausführungsbeispiel der Erfindung ist in Figur 2 dargestellt. Bei diesem Ausführungsbeispiel sind Schichten, die denjenigen des Ausführungsbeispiels gemäß Figur 1 entsprechen, mit gleichen Bezugszeichen versehen. Das zweite Ausführungsbeispiel der Erfindung unterscheidet sich von dem ersten Ausführungsbeispiel dadurch, dass die erste strukturgebende Außenschicht 2 in sich mehrlagig ausgebildet ist. Diese besteht aus einem Faserverbundmaterial umfassend eine erste Faserlage 9 und eine zweite Faserlage 10, die jeweils in einen Matrixwerkstoff in Form eines thermoplastischen oder duroplastischen Kunststoffs eingebettet sind und die durch eine Zwischenschicht 5 als reißfeste Zwischenschicht voneinander getrennt sind. Die Zwischenschicht 5 bildet, gegebenenfalls über weitere Haftvermittlerschichten, einen Haftverbund mit den Faserlagen 9,10.

### Bezugszeichenliste

- 1: mehrlagiges Verbundmaterial
- 2: erste strukturgebende Außenschicht
- 3: zweite strukturgebende Außenschicht
- 4: erste Zwischenschicht
- 5: zweite Zwischenschicht
- 6: erste Haftvermittlerschicht
- 7: zweite Haftvermittlerschicht
- 8: dritte Haftvermittlerschicht
- 9: erste Faserlage
- 10: zweite Faserlage

## Patentansprüche

1. Mehrlagiges Verbundmaterial (1) umfassend
- eine erste strukturgebende, selbsttragend steife Außenschicht (2) aus einem Faserverbundwerkstoff,
- eine zweite strukturgebende Außenschicht (3),
- eine reißfeste Zwischenschicht (5) aus einem Kunststoff, der ausgewählt ist aus einer Gruppe umfassend reißfest modifiziertes Polyethylen, Polyisobutylen, vorgerecktes Polypropylen, Polyvinylbutyral, Ethylenvinylacetat, Polyacrylat, Polymethylenacrylat, Polyurethan, Polyvinylacetat und
- wenigstens eine Haftvermittlerschicht (6, 7, 8),
wobei die reißfeste Zwischenschicht (5) und die Haftvermittlerschicht (6, 7, 8) zwischen den strukturgebenden Außenschichten (2, 3) eingebettet sind und mit den strukturgebenden Außenschichten (2, 3) einen Haftverbund bilden und wobei die strukturgebenden Außenschichten (2, 3) jeweils eine Dicke aufweisen, die ein Vielfaches der Dicke der reißfesten Zwischenschicht (5) oder der Haftvermittlerschicht (6, 7, 8) beträgt, wobei als reißfeste Zwischenschicht eine dünne reißfeste Folie mit einer Bruchdehnung von ≥ 300 % und einer Dicke zwischen etwa 50 µm und 1520 µm, besonders bevorzugt zwischen 50 µm und 300 µm vorgesehen ist.

2. Mehrlagiges Verbundmaterial nach Anspruch 1, **dadurch gekennzeichnet, dass** eine weitere Zwischenschicht(4) aus einem Barrierekunststoff vorgesehen ist

3. Mehrlagiges Verbundmaterial nach Anspruch 1 oder 2, **dadurch gekennzeichnet, dass** die zweite strukturgebende Außenschicht (3) aus einem HDPE oder einem PA besteht.

4. Mehrlagiges Verbundmaterial nach einem der Ansprüche 1 bis 3, **dadurch gekennzeichnet, dass** als Faserverbundwerkstoff ein Werkstoff mit einer thermoplastischen oder duroplastischen Matrix mit in dieser eingebetteten Langfasern oder Endlosfasern vorgesehen ist, wobei die Langfasern oder Endlosfasern ausgewählt sind aus einer Gruppe umfassend Glasfasern, Kohlenstofffasern und Aramidfasern und die Langfasern oder Endlosfasern gewebt oder gelegt sind.

5. Mehrlagiges Verbundmaterial nach einem der Ansprüche 2 bis 4, **dadurch gekennzeichnet, dass** der Barrierekunststoff ausgewählt ist aus einer Gruppe umfassend Polyvinylidenchlorid (PVDC), EthylenVinylalkohol-Copolymer (EVOH), einem flüssigkristallinen Kunststoff (LCP), Polyamid (PA 6), Zellulose und biaxial verstrecktes Polypropylen (BOPP).

6. Mehrlagiges Verbundmaterial nach einem der Ansprüche 1 bis 5, **dadurch gekennzeichnet, dass** als Haftvermittler ein maleinsäureanhydrid modifiziertes LDPE oder ein LLDPE vorgesehen ist.

7. Mehrlagiges Verbundmaterial nach einem der Ansprüche 1 bis 6, **gekennzeichnet durch** einen Schichtenaufbau umfassend der Reihe nach eine äußere HDPE-Schicht oder PA Schicht, eine reißfeste Zwischenschicht (5) und eine strukturgebende Außenschicht (2) aus einem Faserverbundmaterial.

8. Mehrlagiges Verbundmaterial nach einem der Ansprüche 1 bis 6, **gekennzeichnet durch** einen Schichtenaufbau umfassend der Reihe nach eine äußere HDPE-Schicht oder PA Schicht, eine angrenzende erste Haftvermittlerschicht (6), eine Zwischenschicht (4) aus einem Barrierekunststoff, eine zweite Haftvermittlerschicht (7), eine reißfeste Zwischenschicht (5), vorzugsweise eine dritte Haftvermittlerschicht (8), und eine strukturgebende Außenschicht (2) aus einem Faserverbundmaterial.

9. Mehrlagiges Verbundmaterial nach einem der Ansprüche 1 bis 8, **dadurch gekennzeichnet, dass** die Dicke der strukturgebenden Außenschichten (2, 3) zwischen 0,5 und 2 mm, vorzugsweise zwischen 1 und 1, 5 mm beträgt und dass die Dicke der reißfesten Zwischenschicht (5) sowie der Haftvermittlerschicht (6, 7, 8) zwischen 50 µm und 1520 µm beträgt.

10. Behälter aus einem mehrlagigen Verbundmaterial mit den Merkmalen eines der Ansprüche 1 bis 9, wobei die erste strukturgebende Außenschicht (2) eine Außenschicht des Behälters ist und die zweite strukturgebende Außenschicht (3) eine Innenschicht des Behälters ist.

11. Behälter nach Anspruch 10 als Kraftstoffbehälter für ein Kraftfahrzeug.

12. Behälter nach einem der Ansprüche 10 oder 11, **dadurch gekennzeichnet, dass** dieser aus zwei schalenförmigen Formteilen umfassend eine Oberschale und eine Unterschale zusammengesetzt ist.

13. Verfahren zur Herstellung eines Behälters aus einem mehrlagigen Verbundmaterial mit den Merkmalen eines der Ansprüche 1 bis 10, folgende Verfahrensschritte umfassend:
- Bereitstellen von Faser-Matrix-Halbzeugen als Faser-Verbundwerkstoff,
- Erhitzen und Plastifizieren der Faser-Matrix-Halbzeuge,
- Umformen der Faser-Matrix-Halbzeuge zu schalenförmigen Zwischenerzeugnissen,
- Bereitstellen eines mehrschichtigen plastifizierten Extrudats umfassend eine strukturgebende Außenschicht als HDPE-Schicht oder als PA Schicht und eine reißfeste Zwischenschicht in Form einer dünnen reißfeste Folie mit einer Bruchdehnung von ≥ 300 % und einer Dicke zwischen etwa 50 µm und 1520 µm, besonders bevorzugt zwischen 50 µm und 300 µm,
- Einbringen des plastischen Extrudats in das plastifizierte und umgeformte Faser-Matrix-Halbzeug und stoffschlüssiges Verbinden des Faser-Matrix-Halbzeugs und des Extrudats unter Ausnutzung der Plastifizierungswärme und/oder mittels eines Haftvermittlers.

## Claims

1. Multilayer composite material (1) comprising
- a first structure-providing, self-supporting rigid external layer (2) made of a fiber composite material,
- a second structure-providing external layer (3),
- a cracking-resistant intermediate layer (5) made of a plastic selected from a group, comprising cracking-resistance-modified polyethylene, polyisobutylene, prestretched polypropylene, polyvinyl butyral, ethylene-vinyl acetate, polyacrylate, polymethylene acrylate, polyurethane, polyvinyl acetate and
- at least one adhesion promoter layer (6, 7, 8),
where the cracking-resistant intermediate layer (5) and the adhesion promoter layer (6, 7, 8) have been embedded between the structure-providing external layers (2, 3) and form an adhesion bond with the structure-providing external layers (2, 3), and where the thickness of each of the structure-providing external layers (2, 3) is many times the thickness of the cracking-resistant intermediate layer (5) or of the adhesion promoter layer (6, 7, 8), where there is, provided as cracking-resistant intermediate layer, a thin cracking-resistant film with a tensile strain at break of ≥ 300% and a thickness of about 50 µm to 1520 µm, particularly preferably from 50 µm to 300 µm.

2. Multilayer composite material according to Claim 1, **characterized in that** there is a further intermediate layer (4) provided, made of a barrier plastic.

3. Multiplayer composite material according to Claim 1 or 2, **characterized in that** the second structure-providing external layer (3) consists of an HDPE or of a PA.

4. Multilayer composite material according to any of Claims 1 to 3, **characterized in that** fiber composite material provided comprises a material with a thermoplastic or thermoset matrix with long fibers or continuous-filament fibers embedded therein, where the long fibers or continuous-filament fibers are selected from a group comprising glass fibers, carbon fibers and aramid fibers, and the long fibers or continuous-filament fibers have been woven or laid.

5. Multilayer composite material according to any of Claims 2 to 4, **characterized in that** the barrier plastic is selected from a group comprising polyvinylidene chloride (PVDC), ethylene-vinyl alcohol copolymer (EVOH), a liquid-crystalline plastic (LCP), polyamide (PA 6), cellulose and biaxially oriented polypropylene (BOPP).

6. Multilayer composite material according to any of Claims 1 to 5, **characterized in that** adhesion promoter provided comprises a maleic-anhydride-modified LDPE or an LLDPE.

7. Multilayer composite material according to any of Claims 1 to 6, **characterized by** a layer structure comprising, in the following sequence, outer HDPE layer or PA layer, a cracking-resistant intermediate layer (5) and a structure-providing outer layer (2) made of a fiber composite material.

8. Multilayer composite material according to any of Claims 1 to 6, **characterized by** a layer structure comprising, in the following sequence, an outer HDPE layer or PA layer, an adjoining first adhesion promoter layer (6), an intermediate layer (4) made of a barrier plastic, a second adhesion promoter layer (7), a cracking-resistant intermediate layer (5), preferably a third adhesion promoter layer (8), and a structure-providing external layer (2) made of a fiber composite material.

9. Multilayer composite material according to any of Claims 1 to 8, **characterized in that** the thickness of the structure-providing external layers (2, 3) is from 0.5 to 2 mm, preferably from 1 to 1.5 mm, and that the thickness of the cracking-resistant intermediate layer (5), and also of the adhesion promoter layer (6, 7, 8) is from 50 µm to 1520 µm.

10. Container made of a multilayer composite material with the features of any of Claims 1 to 9, where the first structure-providing external layer (2) is an external layer of the container and the second structure-providing external layer (3) is an internal layer of the container.

11. Container according to Claim 10 as fuel container for a motor vehicle.

12. Container according to Claim 10 or 11, **characterized in that** this is composed of two shell-shaped moldings comprising an upper shell and a lower shell.

13. Process for the production of a container made of a multilayer composite material with the features of any of Claims 1 to 10, comprising the following steps:
- provision of semifinished fiber-matrix products as fiber composite material,
- heating and plastification of the semifinished fiber-matrix products,
- molding of the semifinished fiber-matrix products to give shell-shaped intermediate products,
- provision of a multilayer plastified extrudate comprising a structure-providing external layer as HDPE layer or as PA layer and a cracking-resistant intermediate layer, in the form of a thin cracking-resistant film with a tensile strain at break of ≥ 300% and a thickness of about 50 µm to 1520 µm, particularly preferably from 50 µm to 300 µm,
- introduction of the plastic extrudate into the plastified and molded semifinished fiber-matrix product and coherent bonding of the semifinished fiber-matrix product and of the extrudate with utilization of the heat of plastification and/or by means of an adhesion promoter.

## Revendications

1. Matériau composite multicouche (1), comprenant :
- une première couche extérieure (2) rigide autoporteuse structurante en un matériau composite fibreux,
- une deuxième couche extérieure structurante (3),
- une couche intermédiaire résistante au déchirement (5) en une matière plastique, qui est choisie dans un groupe comprenant le polyéthylène modifié pour être résistant au déchirement, le polyisobutylène, le polypropylène préétiré, le polyvinylbutyral, l'éthylène-acétate de vinyle, le polyacrylate, le polyacrylate de méthylène, le polyuréthane, le polyacétate de vinyle, et
- au moins une couche de promoteur d'adhésion (6, 7, 8),
la couche intermédiaire résistante au déchirement (5) et la couche de promoteur d'adhésion (6, 7, 8) étant incorporées entre les couches extérieures structurantes (2, 3), et formant un composite adhésif avec les couches extérieures structurantes (2, 3), et les couches extérieures structurantes (2, 3) présentant chacune une épaisseur qui est un multiple de l'épaisseur de la couche intermédiaire résistante au déchirement (5) ou de la couche de promoteur d'adhésion (6, 7, 8), une feuille mince résistante au déchirement ayant un allongement à la rupture ≥ 300 % et une épaisseur comprise entre environ 50 µm et 1 520 µm, de manière particulièrement préférée entre 50 µm et 300 µm, étant prévue en tant que couche intermédiaire résistante au déchirement.

2. Matériau composite multicouche selon la revendication 1, **caractérisé en ce qu'**une couche intermédiaire supplémentaire (4) en une matière plastique de barrière est prévue.

3. Matériau composite multicouche selon la revendication 1 ou 2, **caractérisé en ce que** la deuxième couche extérieure structurante (3) est constituée par un HDPE ou un PA.

4. Matériau composite multicouche selon l'une quelconque des revendications 1 à 3, **caractérisé en ce qu'**un matériau comprenant une matrice thermoplastique ou duroplastique dans laquelle des fibres longues ou des filaments sont incorporés est prévu en tant que matériau composite fibreux, les fibres longues ou les filaments étant choisis dans un groupe comprenant les fibres de verre, les fibres de carbone et les fibres d'aramide, et les fibres longues ou les filaments étant tissés ou déposés.

5. Matériau composite multicouche selon l'une quelconque des revendications 2 à 4, **caractérisé en ce que** la matière plastique de barrière est choisie dans un groupe comprenant le polychlorure de vinylidène (PVDC), le copolymère d'éthylène-alcool vinylique (EVOH), un plastique cristallin liquide (LCP), le polyamide (PA 6), la cellulose et le polypropylène à étirement biaxial (BOPP).

6. Matériau composite multicouche selon l'une quelconque des revendications 1 à 5, **caractérisé en ce qu'**un LDPE modifié par de l'anhydride de l'acide maléique ou un LLDPE est prévu en tant que promoteur d'adhésion.

7. Matériau composite multicouche selon l'une quelconque des revendications 1 à 6, **caractérisé par** une structure de couches comprenant la série d'une couche d'HDPE ou d'une couche de PA extérieure, d'une couche intermédiaire résistante au déchirement (5) et d'une couche extérieure structurante (2) en un matériau composite fibreux.

8. Matériau composite multicouche selon l'une quelconque des revendications 1 à 6, **caractérisé par** une structure de couches comprenant la série d'une couche d'HDPE ou d'une couche de PA extérieure, d'une première couche de promoteur d'adhésion adjacente (6), d'une couche intermédiaire (4) en une matière plastique de barrière, d'une deuxième couche de promoteur d'adhésion (7), d'une couche intermédiaire résistante au déchirement (5), de préférence d'une troisième couche de promoteur d'adhésion (8), et d'une couche extérieure structurante (2) en un matériau composite fibreux.

9. Matériau composite multicouche selon l'une quelconque des revendications 1 à 8, **caractérisé en ce que** l'épaisseur des couches extérieures structurantes (2, 3) est comprise entre 0,5 et 2 mm, de préférence entre 1 et 1,5 mm, et **en ce que** l'épaisseur de la couche intermédiaire résistante au déchirement (5), ainsi que de la couche de promoteur d'adhésion (6, 7, 8), est comprise entre 50 µm et 1 520 µm.

10. Contenant en un matériau composite multicouche ayant les caractéristiques selon l'une quelconque des revendications 1 à 9, la première couche extérieure structurante (2) étant une couche extérieure du contenant et la deuxième couche extérieure structurante (3) étant une couche intérieure du contenant.

11. Contenant selon la revendication 10 en tant que contenant de carburant pour un véhicule automobile.

12. Contenant selon l'une quelconque des revendications 10 ou 11, **caractérisé en ce que** celui-ci est composé par deux pièces moulées en forme d'enveloppe comprenant une enveloppe supérieure et une enveloppe inférieure.

13. Procédé de fabrication d'un contenant en un matériau composite multicouche ayant les caractéristiques selon l'une quelconque des revendications 1 à 10, comprenant les étapes de procédé suivants :
- la préparation de produits semi-finis fibres-matrice en tant que matériau composite fibreux,
- le chauffage et la plastification des produits semi-finis fibres-matrice,
- le façonnage des produits semi-finis fibres-matrice en produits intermédiaires en forme d'enveloppe,
- la préparation d'un extrudat multicouche plastifié comprenant une couche extérieure structurante en tant que couche d'HDPE ou en tant que couche de PA, et une couche intermédiaire résistante au déchirement sous la forme d'une feuille mince résistante au déchirement ayant un allongement à la rupture ≥ 300 % et une épaisseur comprise entre environ 50 µm et 1 520 µm, de manière particulièrement préférée entre 50 µm et 300 µm,
- l'introduction de l'extrudat plastique dans le produit semi-fini fibres-matrice plastifié et façonné, et la liaison par accouplement de matière du produit semi-fini fibres-matrice et de l'extrudat en utilisant la chaleur de plastification et/ou au moyen d'un promoteur d'adhésion.
